# EUROPEAN PATENT APPLICATION

(11) **EP 3 385 944 A1**
(43) Date of publication of application: **10.10.2018**
(21) Application number: 15909660.1
(22) Date of filing: 30.11.2015
(51) Int. Cl.: G10K 9/12, B60Q 5/00, B06B 1/02

(54) **ELECTRONIC HORN AND METHOD FOR THE USE THEREOF**

(71) Applicant: Fundación Cidaut, 47151 Boecillo (ES)
(72) Inventor: SEGURA DÍAZ DE ESPADA, Iñigo, 47151 Boecillo (Valladolid) (ES); PISONERO BURGOS, Alberto, 47151 Boecillo (Valladolid) (ES); DIEZ MARTÍN, José Francisco, 47151 Boecillo (Valladolid) (ES); DIEZ ANTÓN, Raúl, 47151 Boecillo (Valladolid) (ES); HIDALGO OTAMENDI, Antonio, 47151 Boecillo (Valladolid) (ES); CORDERO IZQUIERDO, Roberto, 47151 Boecillo (Valladolid) (ES); MORCILLO LÓPEZ, Miguel Ángel, 47151 Boecillo (Valladolid) (ES)
(74) Representative: Capitán García, Maria Nuria
(86) International application number: PCT/ES2015/070866
(87) International publication number: WO 2017/093579

(57) **Abstract**

Electronic horn and method of use for maximum acoustic power. The horn comprises a membrane, a coil, acting on a centre with a fixed and mobile part, a sensor detects a signal proportional to the position of the membrane; a control device receives a signal from the sensor and emits a coil trigger signal to generate membrane vibration in each cycle and a system to adjust the sensor signal phases in which the coil trigger signal and switch-off signal occur, calculating the moment of coil activation and switch-off depending solely on the sensor signal. Method of use: sensor signal reception; comparison with a reference; checking; coil trigger signal emission; comparison with a second reference; checking; coil switch-off signal emission.

## Description

### TECHNICAL FIELD OF THE INVENTION

The present invention falls within in the field of electronic horns.

Said invention is an electronic horn and the method for use thereof, said horn having a membrane actuated by a coil, a sensor and a control device, which receives a signal from the sensor, so that the coil is activated and deactivated in each vibration cycle of the membrane.

### BACKGROUND OF THE INVENTION

Electronic horns are known having control devices that regulate the current input to the coil and tune/govern the horn activation manoeuvre with a certain actuation frequency.

This is a fixed actuation frequency and is selected on a microprocessor that governs a pulse generator circuit that opens and closes a transistor. This type of circuit does not at all respond to the dynamic variations in the mechanical properties of the horn when sounding, nor to the assembly or environmental conditions thereof.

Other known horns vary this actuation frequency based on the measurement of an external sensor that allows the maximum response frequency to be achieved, thus making it possible to vary the frequency of the pulse generator circuit that governs the transistor according to this maximum response frequency, as in patent US2008/0309466. In any case, these control devices have a pulse generator circuit that opens and closes a transistor and this type of control strategy can be described as performing a control in the frequency domain.

In patent WO93/21613, a control device adjusts the frequency and the phase of triggering or activation of the horn to the frequency and phase of the sound signal measured by a sound sensor but doing so by comparing a pulse train (horn triggering pulse train with pulse train resulting from the vibration of the membrane), not by adjusting the trigger to a certain position of the membrane in each cycle, i.e. the adjustment is not made in each membrane vibration cycle but requires a pulse train or several cycles for phase adjustment. As a result, the system is slower in adapting to the point of maximum acoustic signal.

In utility model ES1079105, the horn is controlled from a base frequency generated by a basic oscillator combined with the sensor signal (microphone) through RC circuits whereby the trigger point not only responds to direct information from the signal produced by the membrane and therefore, information directly linked to its position.

However, in order to obtain the maximum acoustic power, the importance lies in the complementary adjustment of two parameters: the moment at which the force must be applied to the membrane in order to force its movement until it reaches its optimum deformation and therefore the optimum storage of elastic energy and the moment at which said force must be released to allow it to move freely, releasing the elastic energy stored therein. Both moments are linked to two particular positions of the membrane in its oscillation that correspond to two specific values of the phase of said oscillation, so ideally it is possible to adjust the moment of energisation (or application of force) and the moment when it stops being produced (or release of the applied force) from a signal that provides information directly linked to the position of the membrane defined by the value of the phase of said signal. This ensures maximum acoustic power regardless of any factor that may affect the membrane oscillation times, since the selected energisation and release points shall always be the optimum ones. The energisation frequency and the energisation time will therefore be a consequence of the above rather than a control parameter to search for the optimum operating point.

An electronic horn that covers the need explained is shown below, allowing the adjustment of the energisation point and the point at which the coil ceases to be energised to its optimum value and it solves the disadvantages of the state of the art.

### DESCRIPTION OF THE INVENTION

The present invention is defined and characterised in the independent claims, while the dependent claims describe additional features thereof.

The object of the invention is an electronic horn and its method of use so that the maximum acoustic power is obtained by adjusting the exact points at which the membrane must be activated and deactivated. The technical problem to be solved is to configure the horn elements and the way they interact as well as the steps of the method of use to achieve the aforementioned object.

In view of the above, the present invention refers to an electronic horn that comprises the following elements known in the prior art:
- a membrane, usually in the shape of a circular crown and with a characteristic rigidity, which generates sound waves from its harmonic movement;
- a coil, capable of inducing a force proportional to the electric current that passes through it, which acts on a centre with a fixed part and a mobile part to which the inner face of the membrane is attached in order to transmit the movement generated by the sound waves;
- a sensor that detects a signal that is proportional to the position of the membrane;
- a control device, usually with a transistor, which receives a signal from the sensor and emits a coil trigger signal to generate the movement of the membrane in such a way that the point at which the trigger occurs or switch-on point and the point at which the trigger ends or switch-off point are exclusively defined by the point at which the phase of the signal received from the sensor reaches certain values.

The horn is characterised in that the control device receives the signal from the sensor in each membrane vibration cycle and comprises a system for adjusting the phase values of the sensor signal at which the coil is switched on and off. The control device is provided with a system to compensate, cycle by cycle, for phase variations that may result from changes in the amplitude of the sensor signal or in the membrane movement times resulting from changes in the mechanical or environmental characteristics of the horn.

The coil is also characterised in that this control device calculates the moment of activation and switching off, in the sense of determining the optimum moment of the coil in each vibration cycle thereof, that is to say, regardless of the time the membrane takes to reach each point and therefore automatically adapting to the mechanical and dynamic characteristics thereof during each cycle.

This moment is calculated solely based on the sensor signal, therefore, at a frequency solely determined by the time required in each half cycle for the membrane to move to the optimum trigger point and the optimum switch-off point (unlike utility model ES1079105 where the trigger depends on the combination of a base signal generated by an oscillator and the sensor signal, so that in the absence of the latter, there is always the base signal), so that the membrane generates the maximum acoustic pressure for each vibration cycle.

In this way, the horn operates in a closed-loop mode and in the time domain, unlike those of the prior art that operate in the frequency domain, instantaneously providing in each cycle the maximum acoustic capacity of the horn, unlike those of the prior art that provide horn activation following a pulse train and without the activation corresponding to the maximum acoustic capacity of the horn.

A further advantage is that the horn operates instantaneously in maximum acoustic response mode for the mechanical properties of the horn components and environmental conditions in a dynamic environment without needing to generate a signal from an oscillator in order to obtain the horn trigger signal: the membrane rigidity (stress state), the rigidity of the membrane support, the cavity defined by the membrane tube, the mobile mass of the centre, the initial position of the mobile mass at the moment the horn is energised, the resistance and inductance of the coil, the different temperatures, etc.

Another advantage is that the adjustment to the optimum trigger and switch-off point is stable despite variations in the free movement time of the membrane due, as mentioned, to variations of different internal horn parameters as well as external environmental or interface parameters between the horn and its anchor point.

Optionally, the system for adjusting the phases of the sensor signal received in which the coil is triggered and switched off are resistors, arranged in the horn circuit, so this system is simple to implement and economical allowing the circuit to be used with different types or characteristics of measurement sensors.

One option is for the sensor to be a sound sensor placed near the outer face of the membrane to detect the waves emitted thereby, or a mechanical sensor placed near the membrane to detect the position thereof, or an electromagnetic sensor placed near the coil to detect the field generated thereby. At least one of these sensors is required, while the placement of two or all three is optional and can be carried out in order to have certainty in the detection of the signal that the control device will receive from the sensor(s).

Also, the invention is the method for use of an electronic horn as mentioned above, which is characterised in that it comprises the following steps:
- reception by the control device of the signal solely emitted by the sensor;
- comparison of the signal received by the control device with a reference phase value that is proportional to the signal emitted by the sensor, thus variations in the amplitude of the signal do not affect the membrane position set by the reference;
- checking that the signal compared reaches the reference phase value;
- emission of the coil trigger signal. - comparison of the signal received by the control device with a new reference phase value that is proportional to the signal emitted by the sensor, thus variations in the amplitude of the signal do not affect the membrane position set by the reference;
- checking that the signal compared reaches the reference phase value;
- emission of coil switch-off signal.

Thus, the membrane is always activated at the optimum moment in each cycle, providing maximum acoustic power from the horn. An activation and/or switch-off moment distanced from these optimum moments would result in too long or too short a free movement time and/or too long or too short an energisation time, and therefore a lower acoustic power.

There are also two alternatives for adjusting the coil trigger switch-on and switch-off moment to its optimum values. In the first alternative, the control device incorporates a system for setting an energisation time from the optimum trigger point obtained as explained above, whose duration depends on the free movement time of the membrane to the trigger point of the preceding cycle in order to maintain a constant working cycle in the membrane energisation signal in each cycle. In the second alternative the control device incorporates an on/off delay system in order to be able to use non-optimal phase values of the sensor signal and still trigger and switch off the coil at the optimum moments provided by the above-mentioned delay system. This alternative incorporates a system that compensates the variations of amplitude in value and in time of each oscillation in order to adapt the previous delays to variations of said parameters while maintaining the trigger and switch-off at the optimum phase points. These two alternatives enable the use of simpler sensors that do not provide information on the membrane position throughout the entire oscillation but at certain moments of the oscillation, being able to use these points as a phase reference to obtain therefrom the optimum phase points through the previous delays.

### BRIEF DESCRIPTION OF THE DRAWINGS

The present specification is accompanied by a set of drawings illustrating a preferred embodiment without limiting the invention in any way.
Figure 1 shows a diagram of the electronic horn.
Figure 2 represents a graph of the membrane waveform.
Figure 3 represents an example embodiment of a circuit.
Figure 4 represents another example embodiment of a circuit.
Figure 5 represents another example embodiment of a circuit.
Figure 6 represents a graph of the waveforms linked to the circuit of Figure 3.
Figure 7 represents the variation of the waveforms of Figure 6.
Figure 8 represents a graph of the waveforms linked to the circuit of Figure 4.
Figure 9 represents the variation of the waveforms of Figure 8.

### DETAILED DESCRIPTION OF THE PREFERRED EMBODIMENT OF THE INVENTION

An embodiment of the invention is described below with reference to the figures.

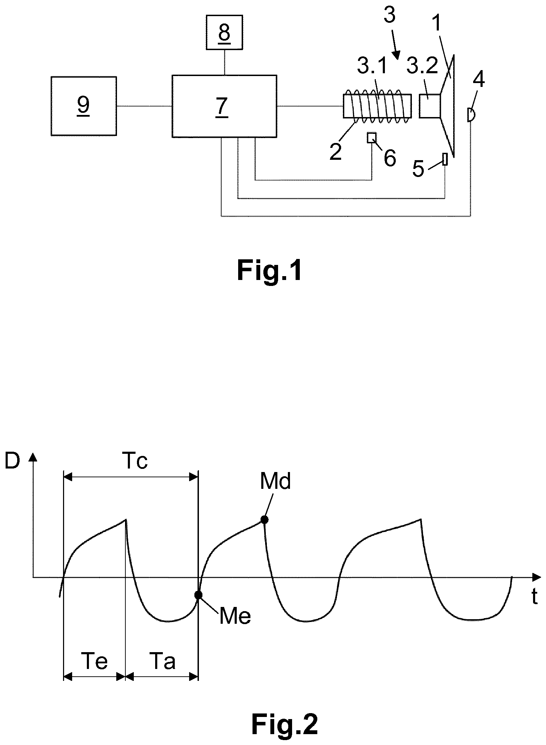

Figure 1 shows an electronic horn receiving electrical energy from a power supply (9), with a membrane (1), which generates sound waves from its harmonic movement; a coil (2), which acts on a centre (3) with a fixed part (3.1) and a mobile part (3.2) to which the inner face of the membrane (1) is attached to transmit thereto the movement generated by the sound waves; several sensors (4,5,6) that detect a signal that is proportional to the position of the membrane (1); a control device (7) that receives a signal from at least one sensor (4,5,6) and emits a coil (2) trigger signal to generate the movement of the membrane (1); wherein the control device (7) receives the signal from the sensor (4,5,6) in each vibration cycle of the membrane (1) and comprises a system, such as a resistor (see examples of embodiment of the circuits below), to adjust the coil (2) trigger and switch-off signals to certain phase values of the sensor signal received, said control device (7) calculates the moment of coil (2) trigger and switch-off of the vibration cycle thereof based solely on the sensor (4,5,6) signal, therefore, at a frequency solely determined by the time the membrane (1) takes to move to its optimum trigger and switch-off positions, without the need for a base frequency signal generated by an oscillator like in utility model ES1079105, and emits a coil (2) trigger signal so that the membrane (1) provides the maximum sound pressure for the vibration cycle.

Figure 2 depicts a graph showing the distance of the membrane (1) from its rest position, with a cycle time (Tc), a switch-on time (Tc) or energisation time and a switch-off time (Ta) or release time which reaches the moment of energisation (Me); in the following cycle the optimum moment (Md) of release of the elastic energy accumulated in the membrane (1) is indicated. In Figure 2 the abscissa axis is time (t) and the ordinate axis is distance (D).

The embodiment further presents the option of a membrane (1) oscillation starting device (8).

Specifically and in relation to the sensors (4,5,6), in the embodiment explained, one sensor is a sound sensor (4) placed near the outer face of the membrane (1) to detect the waves emitted thereby, another sensor is a mechanical sensor (5) placed near the membrane (1) to detect the position thereof, and another sensor is an electromagnetic sensor (6) placed near the coil (2) to detect the field generated thereby. At least one sensor (4,5,6) is required, while two or three serve to provide greater certainty in the sensed signal.

The method for use of an electronic horn as described above includes the following steps:
reception by the control device (7) of the signal emitted solely by the sensor (4,5,6), i.e. without needing a signal, usually periodic, at a base frequency generated by an oscillator like in utility model ES1079105;
- comparison of the signal received by the control device (7) with a reference phase value that is proportional to the signal emitted by the sensor (4,5,6);
- checking that the signal compared reaches the reference phase value;
- emission of the coil (2) trigger signal.
- comparison of the signal received by the control device (7) with a second reference phase value that is proportional to the signal emitted by the sensor (4,5,6);
- checking that the signal compared reaches the reference phase value;
- emission of the coil (2) switch-off signal.

An alternative to the above procedure is that switch-off occurs after an adjustable energisation time rather than by comparing the sensor (4,5,6) signal with a second reference phase value and wherein the energisation time varies from cycle to cycle depending on the switch-off time of the preceding cycle in order to maintain the working cycle of the membrane (1) energisation signal constant; another alternative to the procedure is that switch-on and switch-off occurs following each of the delays, independently defined, upon detection of the reference phase values in the sensor (4,5,6) signal corresponding to switch-on and switch-off, the delays being compensated in the event of variations in the membrane (1) oscillation times or membrane amplitude in order to maintain constant the sensor (4,5,6) phase values at which switch-on and switch-off occur.

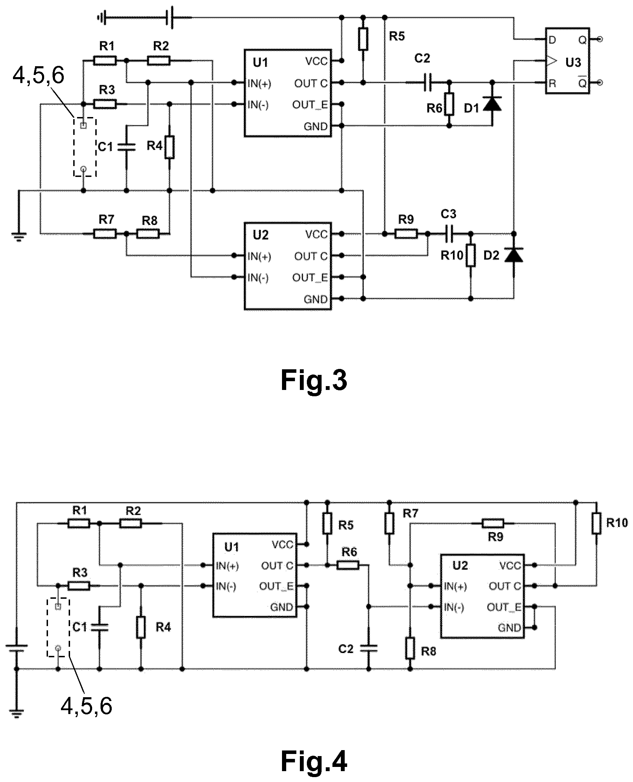

Figure 3 shows the diagram of a circuit for switching the coil (3) on and off -the signal for switching the transistor connected to the coil on and off is the output Q of U3- at the moments when the signal received from the sensor (4,5,6) reaches the phase values defined by resistors R7 and R8 (for switch-on) and R1 and R2 (for switch-off).

Figure 4 shows the diagram of a circuit for switching the coil (3) on and off -the signal for switching the transistor connected to the coil on and off is the output OUT_C of U2- at the moments when the signal received from the sensor (4.5,6) reaches the phase values defined by resistors R7 and R8 (for switch-on) and R1 and R2 (for switch-off) plus a phase shift defined by the discharge of capacitor C2 through R6 (for switch-on) and by the discharge of capacitor C2 through R5 and R6 (for switch-off).

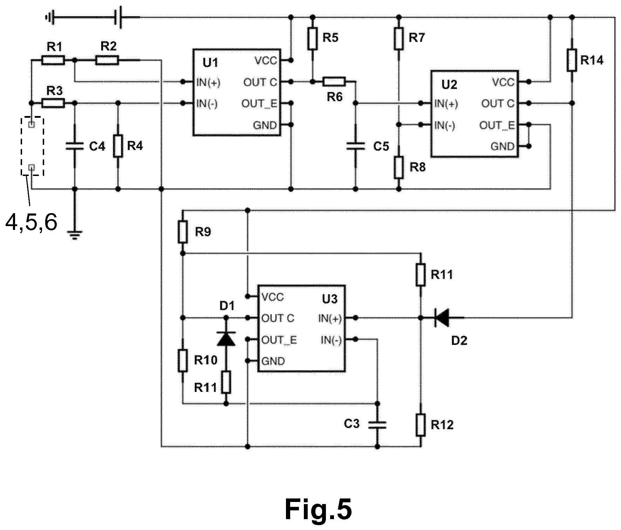

Figure 5 shows the diagram of a circuit for switching the coil (3) on at the moment when the signal received from the sensor (4,5,6) reaches the phase value defined by resistors R1 and R2 and for switch-off when the time defined by resistor R13 and capacitor C3 has elapsed. The signal for switching the transistor connected to the coil (3) on and off is output OUT_C of U3.

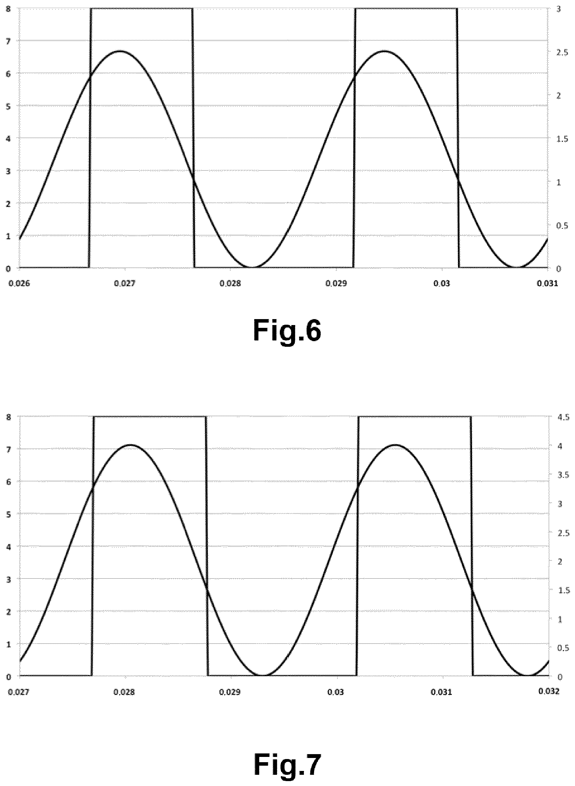

Figures 6 and 7 show that the sensor (4,5,6) signal input interfaces consisting of resistors R1, R2, R3, R4, R7 and R8 and the capacitor C1, circuit in Figure 3, ensure that the phase values of the sensor (4,5,6) signal at which switch-on (resistors R7 and R8) and switch-off (resistors R3 and R4) occur remain constant regardless of the value of amplitude or frequency of the signal. Figure 7 shows how when the amplitude of the sensor signal varies the phase values of switch-on and switch-off remain constant. This is because the reference used to detect the phase value (determined by R1, R2 and the capacitor C1) changes its value in the same proportion as the amplitude of the sensor signal changes as the signal itself provided by the sensor is used to set the reference.

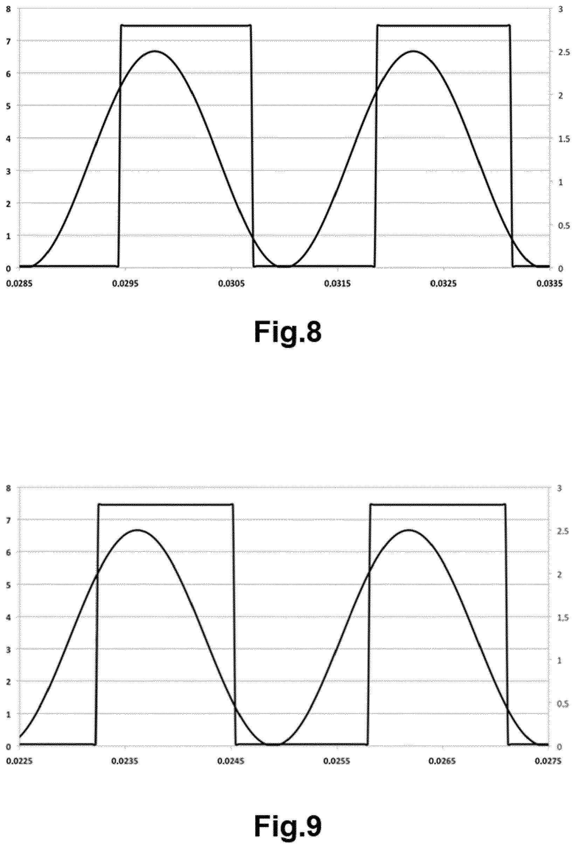

Figures 8 and 9 show that the phase delay for switch-on is caused by the discharge time of capacitor C2 through the resistor R6, circuit in Figure 4. The phase delay for switch-off is caused by the charging time of capacitor C2 through resistors R5 and R6. If the free movement time of the membrane (1) increases, with the coil (3) off, the charging time of C2 will be extended and C2 will reach a higher value than the one reached in the preceding cycle, so that the discharge time to reach the reference defined by R7, R8 and R9 will also be higher and the phase value at switch-on will remain the same. Likewise, the phase value for switch-off is maintained constant (the delay also varies in time so that switch-off occurs at the same phase value regardless of the time the membrane takes to move to its optimum switch-off position). Figure 9 shows how the sensor (4,5,6) signal phases at switch-on and switch-off do not change despite the variation of the times that the membrane (1) takes to reach said phase values.

In the waveform diagrams in Figures 6 to 9 the ordinate axes correspond to voltages (the sensor signal voltages being indicators of the positions of the membrane in its movement) and the abscissa axes correspond to time.

## Claims

1. E lectronic horn that comprises:
- a membrane (1), which generates sound waves from its harmonic movement;
- a coil (2), acting on a centre (3) with a fixed part (3.1) and a mobile part (3.2) to which the inner face of the membrane (1) is attached to transmit thereto the movement generated by the sound waves;
- a sensor (4,5,6) that detects a signal that is proportional to the position of the membrane (1);
- a control device (7), which receives a signal from the sensor (4,5,6) and emits a coil (2) trigger signal to generate the movement of the membrane (1);
**characterised in that** the control device (7) receives the signal from the sensor (4,5,6) along the vibration of the membrane (1) and comprises a system for adjusting the phases of the sensor signal received at which the coil (2) trigger signal and the switch-off signal occur such that the moments of coil (2) activation and switch-off depend solely on the sensor (4,5,6) signal, and in particular the moment at which the membrane (1) reaches its optimum trigger position and its optimum switch-off position, such that the membrane (1) oscillates, producing the maximum sound pressure for the vibration cycle.

2. Horn according to claim 1 wherein the system for adjusting the sensor signal phases at which coil (2) trigger and switch-off occur are resistors.

3. Horn according to any of the preceding claims comprising a membrane (1) oscillation starting and stopping device (8).

4. Horn according to any of claims 1 to 3 wherein the sensor is a sound sensor (4) placed near the outer face of the membrane (1) to detect the waves emitted thereby.

5. Horn according to any of claims 1 to 3 wherein the sensor is a mechanical sensor (5) placed near the membrane (1) to detect the position thereof.

6. Horn according to any of claims 1 to 3 in which the sensor is an electromagnetic sensor (6) placed near the coil (2) to detect the field generated thereby.

7. Method for the use of an electronic horn according to any of the preceding claims **characterised in that** it comprises the following steps:
- reception by the control device (7) of the signal solely emitted by the sensor (4,5,6);
- comparison of the signal received by the control device (7) with a reference phase value that is proportional to the signal emitted by the sensor (4,5,6);
- checking that the signal compared reaches the reference phase value;
- emission of the coil (2) trigger signal.
- checking that the signal compared reaches the second reference phase value;
- emission of the coil (2) switch-off signal.

8. Method for the use of an electronic horn according to any of claims 1 to 6, **characterised in that** in the method of claim 7 switch-off occurs following an adjustable energisation time rather than by comparing the sensor (4,5,6) signal with a second reference phase value and wherein the energisation time varies from cycle to cycle depending on the switch-off time of the preceding cycle in order to maintain the working cycle of the membrane (1) energisation signal constant.

9. Method for the use of an electronic horn according to any of claims 1 to 6, **characterised in that** in the method of claim 7 switch-on and switch-off occurs following each of the delays, independently defined, upon detection of the reference phase values in the sensor (4,5,6) signal corresponding to switch-on and switch-off, the delays being compensated in the event of variations in the membrane (1) oscillation times or membrane amplitude in order to maintain constant the sensor (4,5,6) phase values at which switch-on and switch-off occur.
